# EUROPEAN PATENT SPECIFICATION

(11) **EP 0 927 322 B1**
(45) Date of publication and mention of the grant of the patent: **16.10.2002**
(21) Application number: 97938805.5
(22) Date of filing: 02.09.1997
(51) Int. Cl.: F24C 3/12, F16K 11/10

(54) **A GAS VALVE**
GASVENTIL
VANNE A GAZ

(30) Priority: 02.09.1996 DK 93096
(43) Date of publication of application: 07.07.1999
(73) Proprietor: AKTIEBOLAGET ELECTROLUX, 105 45 Stockholm (SE)
(72) Inventor: ESKILDSEN, Christian, DK-5591 Gelsted (DK); SMITH, Allan, Joseph, Sutton Coldfield Westmidlands B73 6PS (GB)
(74) Representative: Svahn, Göran
(86) International application number: DK9700363
(87) International publication number: WO98010229

(56) References cited:
- EP-A- 0 064 034
- EP-A- 0 205 655
- FR-A- 2 690 226
- GB-A- 2 178 519
- US-A- 5 313 985
- US-A- 5 425 353

## Description

The invention relates to a multiple valve construction similar to US-A-5 313 985 for gas valves employing a valve member with essentially translational fitted movement fitted between an ante-chamber and an outlet.

In order to obtain an efficient manufacture of a gas oven with a hob, the necessary valves are frequently pre-assembled in a block, e.g. by mounting a series of valves on a common profile, and this pre-assembly is then fitted into the oven as one unit. Known valves are operated by e.g. rotating knobs which are connected by shafts. This creates a long gas line from the valve to at least some of the burners or the oven. By using piezoelectric or electromagnetic valves the controls are electric, and the gas valve unit may be fitted in a location which offers a better compromise as to connections. However, the assembly as a unit still requires several operations, and no advantage has until now been taken of the fact that the piezoelectric and electromagnetic valves may themselves have a very compact construction due to the essentially translational movement and short travel of the valve member.

It is a purpose of the invention to provide a multiple valve which is versatile in its use and which avoids complex subassemblies, i.e. operations which have to take place between the assembly of the parts of the valve and the fitting of a multiple valve in an oven.

It is a further purpose of the invention to provide a compact valve structure which permits the integration of safety features into the structure.

This is obtained in a construction which is particular in that it is a single block constituted of in particular circular valves in a row on either side of a wall, with the centres of the valves on one side displaced approximately one half-diameter with respect to the other side, and with communication passages between valve chambers on opposite sides of the wall as well as communication passages to outlets to individual gas burners.

In an advantageous embodiment one side of the block constitutes a common ante-chamber connected to the gas supply, the valves on this side establishing connection to individual ante-chambers for valves on the other side.

In a further advantageous embodiment the block consists of a suitably shaped three-dimensional body embodying all passages and connections, said body being closed on both sides by plate-shaped members which are fitted in a leak-tight fashion to said body.

In a further advantageous embodiment, passages for wires supplying electrical control signals to the valves are sealed by the plate-shaped members against the outer . edges of the ante-chambers.

The invention will be further described with reference to the drawings, in which
Fig. 1 shows a valve block according to an embodiment of the invention from one side,
Fig. 2 shows the same valve block when turned 180° about a vertical axis, and
Fig. 3 shows bottom and side views of the same valve block.

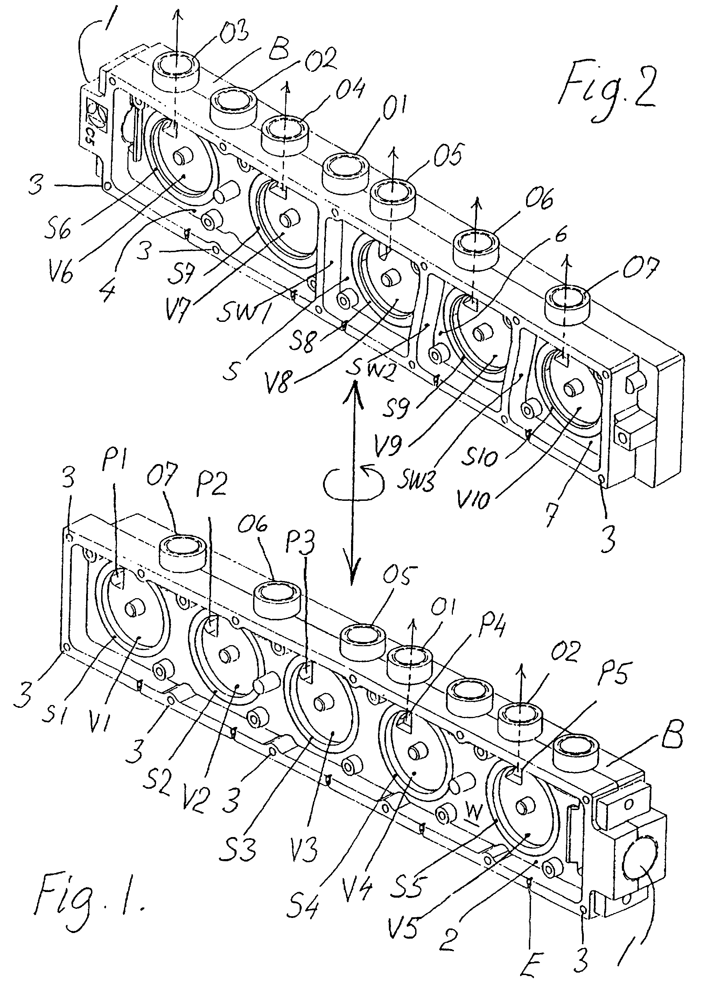

In Fig. 1 is shown a gas inlet 1 which is placed at one short side in the valve block B. The valve block B may be machined or cast as a single unit and has essentially two sides and a dividing wall W. The gas inlet 1 communicates with a manifold space 2 on one side of the valve block which in use is covered by a tightly sealed lid which is not shown. The lid is fastened by means of fasteners which engage the holes 3 in the valve block. In the figure are shown five well-shaped depressions V1-V5 surrounded by circular smooth flat surfaces S1-S5 which each constitute the seat of a sealing member for a disc valve which is not shown. The discs are actuated, either directly, as in the case of a piezoelectric type valve, or from valve stems which are slidably mounted in the lid and actuated, e.g. by means of a solenoid. When a disc is closed, no gas will pass into the interior of the valve in question.

The wells V1, V2, and V3 inside the valve each have a passageway P1-P3 through the dividing wall to the other side of the valve block, and by opening and closing the valves, the gas flow to the other side of the wall W may be controlled. Disposed somewhat differently, the wells W4 and W5 communicate via P4 and P5 with outlets O1, O2 on top of the valve block.

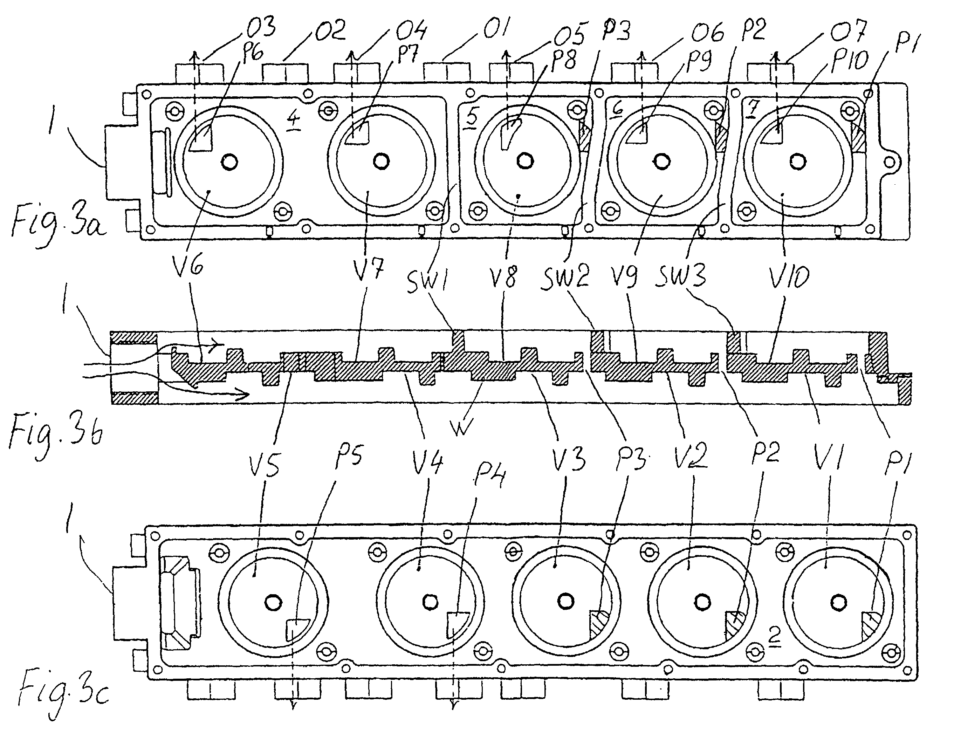

Referring now to Fig. 2, it is seen that the other side of the valve block is divided into four ante-chambers 4, 5, 6, 7 which each form closed spaces when a second lid is tightly sealed onto this side. Ante-chamber 4 is supplied from inlet 1 and is in reality also a manifold space, supplying outlets O3 and O4 via P6 and P7, respectively. This is also brought out in Fig. 3, in which in particular Fig. 3b shows that the gas from inlet 1 is divided into the two manifold spaces. The passageways enter the ante-chambers on the outside of valve elements V6-V10, S6-S10 similar to those on the other side of the valve block B. The outlets are connected to gas burners.

It will be seen that the valves V1, V2, and V3 have to be open in order that gas is supplied to the individual ante-chambers relating to valves V8, V9, and V10 on the other side of the wall W, and that no gas is supplied to the outlets O5, O6, or O7, unless the particular valves V8, V9, and V10 are open simultaneously. This construction is in effect a very compact series-connection of valves which enhances safety.

Fig. 3 is divided into part figures 3a, 3b, and 3c in such a way that the valve block is seen from below in Fig. 3b and turned through 90°, with the outlet parts which are farthest from the plane of the drawing turned upwards on Fig. 3a, and these parts turned downwards on Fig. 3c. In this way it becomes clear how the internal passages P in the valve block create the necessary communication between the ante-chambers, the valves V, and the outlets O. It will be readily understood that the placement of the sidewalls SW1, Sw2, Sw3, and possible similar walls in locations not shown gives a further freedom in the distribution controlled by the valve block. It would be quite feasible to double the supply of gas by connecting valves or outlets in parallel, e.g. connecting O3 and O4 to the same gas burner.

In case the valves are piezoelectric disc valves, the entire operation may occur between the cover and the valve body B. The electrical supply to a valve is by means of an insulated wire which has to pass through e.g. a wall, and in Fig. 1, E shows a passageway for such an electrical wire designed to operate the valve V5. The passageway is preferably made as a gas-tight passage which becomes leakproof when the lid is sealed on the side of the valve body. Similar passageways are distributed, one per valve, on both sides of the valve body.

## Claims

1. A multiple valve construction for gas valves employing a valve member with essentially translational movement fitted between an ante-chamber and an outlet, **characterized in that** it is a single block (B) constituted of in particular circular valves (V1-V10) in a row on either side of a wall, with the centres of the valves on one side displaced approximately one half-diameter with respect to the other side, and with communication passages (P1-P3) between valve chambers on opposite sides of the wall as well as communication passages (P4-P10) to outlets (O1-O7) to individual gas burners.

2. A multiple gas valve according to claim 1, **characterized in that** the block consists of a suitably shaped three-dimensional body embodying all passages and connections, said body being closed on both sides by plate-shaped members which are fitted in a leak-tight fashion to said body.

3. A multiple gas valve according to claim 1 or 2, **characterized in that** one side of the block constitutes a common ante-chamber connected to the gas supply, the valves on this side establishing connection to individual ante-chambers for valves on the other side.

4. A multiple gas valve according to claim 1 or 2, **characterized in that** the outlets are disposed on at least one line which is near the outside edge of the dividing wall (W) and in the plane of the wall.

5. A multiple gas valve according to claim 1 or 2, **characterized in that** the inlet of gas occurs at an edge of the dividing wall (W).

6. A multiple gas valve according to claim 5, **characterized in that** the inlet supplies ante-chambers on both sides of the dividing wall.

7. A multiple gas valve according to any of the preceding claims, **characterized in that** passages (E) for wires supplying electrical control signals to the valves are sealed by the plate-shaped members against the outer edges of the ante-chambers.

## Patentansprüche

1. Mehrfachventilanordnung für Gasventile, die ein Ventilelement mit im wesentlichen in Querrichtung verlaufender Bewegung einsetzten, welches zwischen einer Vorkammer und einem Auslass eingepasst ist, **dadurch gekennzeichnet, dass** sie ein einzelner Block (B) ist, der aus insbesondere kreisförmigen Ventilen (V1-V10) in einer Reihe auf jeder Seite einer Wand gebildet wird, wobei die Mittelpunkte der Ventile auf einer Seite etwa um einen halben Durchmesser bezüglich der anderen Seite versetzt sind, und wobei Kommunikationsdurchgänge (P1-P3) zwischen den Ventilkammern auf gegenüberliegenden Seiten der Wand sowie Kommunikationsdurchgänge (P4-P10) zu den Auslässen (01-07) zu einzelnen Gasbrennern vorhanden sind.

2. Mehrfachgasventil nach Anspruch 1, **dadurch gekennzeichnet, dass** der Block aus einem geeignet geformten dreidimensionalen Körper besteht, der alle Durchgänge und Verbindungen beinhaltet, wobei der Körper auf beiden Seiten durch plattenförmige Elemente verschlossen ist, die in einer leckdichten Weise an den Körper angepasst sind.

3. Mehrfachgasventil nach Anspruch 1 oder 2, **dadurch gekennzeichnet, dass** eine Seite des Blocks eine gemeinsame Vorkammer bildet, die mit der Gaszufuhr verbunden ist, wobei die Ventile auf dieser Seite eine Verbindung mit einzelnen Vorkammern für Ventile auf der anderen Seite herstellen.

4. Mehrfachgasventil nach Anspruch 1 oder 2, **dadurch gekennzeichnet, dass** die Auslässe auf wenigstens einer Linie angeordnet sind, sie sich nahe am Außenrand der Trennwand (W) und in der Ebene der Wand befindet.

5. Mehrfachgasventil nach Anspruch 1 oder 2, **dadurch gekennzeichnet, dass** der Einlass für Gas an einem Rand der Trennwand (W) erfolgt.

6. Mehrfachventil nach Anspruch 5, **dadurch gekennzeichnet, dass** der Einlass die Vorkammern auf beiden Seiten der Trennwand versorgt.

7. Mehrfachgasventil nach einem der vorherigen Ansprüche, **dadurch gekennzeichnet, dass** Durchgänge (E) für Drähte, die den Ventilen elektrische Steuersignale zuführen, durch die plattenförmigen Elemente gegen die Außenränder der Vorkammern abgedichtet sind.

## Revendications

1. Une construction à soupapes multiples pour des soupapes à gaz utilisant un élément de soupape avec un déplacement essentiellement en translation, monté entre une chambre de précombustion et une sortie, **caractérisée en ce qu'**elle est un seul bloc (B), constitué en particulier de soupapes (V1-V10) circulaires, alignées sur l'un ou l'autre côté d'une paroi, avec les centres des soupapes décalés sur un côté d'environ un demi-diamètre par rapport à l'autre côté, et avec des passages de communication (P1-P3) entre les chambres de soupape sur les côtés opposés de la paroi, et également des passages de communication (P4-P10) vers des sorties (O1-O7) vers des brûleurs à gaz individuels.

2. Une soupape à gaz multiple selon la revendication 1, **caractérisée en ce que** le bloc consiste en un corps tridimensionnel de forme appropriée, englobant tous les passages et les liaisons, ledit corps étant fermé de chaque côté par des éléments en forme de plateau qui sont fixés de façon à éviter les fuites sur ledit corps.

3. Une soupape à gaz multiple selon la revendication 1 ou 2, **caractérisée en ce qu'**un côté du bloc constitue une chambre de précombustion commune reliée à l'alimentation en de gaz, les soupapes sur ce côté établissant la liaison avec des chambres de précombustion individuelles pour des soupapes de l'autre côté.

4. Une soupape à gaz multiple selon la revendication 1 ou 2, **caractérisée en ce que** les sorties sont situées sur au moins une ligne qui est proche du bord extérieur de la paroi de division (W) et dans le plan de la paroi.

5. Une soupape à gaz multiple selon la revendication 1 ou 2, **caractérisée en ce que** l'entrée de gaz se produit à un bord de la paroi de division (W).

6. Une soupape de gaz multiple selon la revendication 5, **caractérisée en ce que** l'entrée alimente les chambres de précombustion de chaque côté de la paroi de division.

7. Une soupape de gaz multiple selon l'une quelconque des revendications précédentes, **caractérisée en ce que** des passages (E) pour des câbles fournissant des signaux de commande électrique aux soupapes sont rendus étanches par les éléments en forme de plateau, contre les bords extérieurs des chambres de précombustion.
